# EUROPEAN PATENT APPLICATION

(11) **EP 2 402 146 A2**
(43) Date of publication of application: **04.01.2012**
(21) Application number: 11170900.2
(22) Date of filing: 22.06.2011
(51) Int. Cl.: B29C 70/34, B32B 3/08

(54) **Ply drop modifications for composite laminate materials and related methods**

(30) Priority: 29.06.2010 US 826256
(71) Applicant: General Electric Company, Schenectady, NY 12345 (US)
(72) Inventor: Fritz, Peter James, Greenville, SC South Carolina 29615 (US); Driver, Howard Daniel, Greenville, SC South Carolina 29615 (US); Kyriakides, Steven Alan, Greenville, SC South Carolina 29615 (US)
(74) Representative: Bedford, Grant Richard

(57) **Abstract**

A composite laminate material 310, 510, 710, 910, 1010 is disclosed. The composite laminate material 310, 510, 710, 910, 1010 includes a plurality of adjacently disposed plies 314, 514, 714, 914. At least one of the plies 314, 514, 714, 914 is configured as a terminated ply 320, 520, 720, 920. Additionally, a ply drop 312, 512, 712, 912 is defined by the terminated ply 320, 520, 720, 920, wherein the ply drop 312, 512, 712, 912 includes a modification configured to reduce stress concentrations within the composite laminate material.

## Description

The present subject matter relates generally to composite laminate materials and, more particularly, to ply drop modifications for reducing stress concentrations within composite laminate materials.

Composite laminate materials ("laminates") generally consist of a plurality of layers or plies of composite material assembled together to provide the laminate with improved engineering properties. Each ply typically includes a reinforcement material surrounded by and supported within a matrix material. With regard to fiber-reinforced laminates, reinforcement materials generally include high-strength fibers, such as glass or carbon fibers, with suitable matrix materials including various polymer or resin materials, such as such epoxy, polyester or vinyl ester resins. Typically, known reinforcement materials are designed to have both high static and fatigue strengths and, thus, can provide superior stiffness and strength to components formed from laminate materials. Accordingly, laminates are generally used across a wide range of applications to create structural and/or load-bearing components. For example, laminates are often used in the wind turbine industry to create high-strength rotor blades and other rotor blade components. Similarly, laminates are used to manufacture aerospace components, boats, bicycle frames, helicopter blades and various other components that require increased strength and stiffness.

Laminate components are typically manufactured by assembling a plurality of plies one on top of the other within a suitable tool or mold until a required thickness is achieved. However, depending on the desired configuration of the component being manufactured, it is often necessary to taper the thickness of the laminate. For example, thickness tapering may be required to create a component having a desired surface contouring or shape. To provide such thickness tapering, one or more shortened or terminated plies are typically introduced at various locations within the laminate to form ply drops. Each ply drop generally represents a step-reduction in the thickness of the laminate, thereby permitting a laminate material to taper from a thick cross-section to a thinner cross-section.

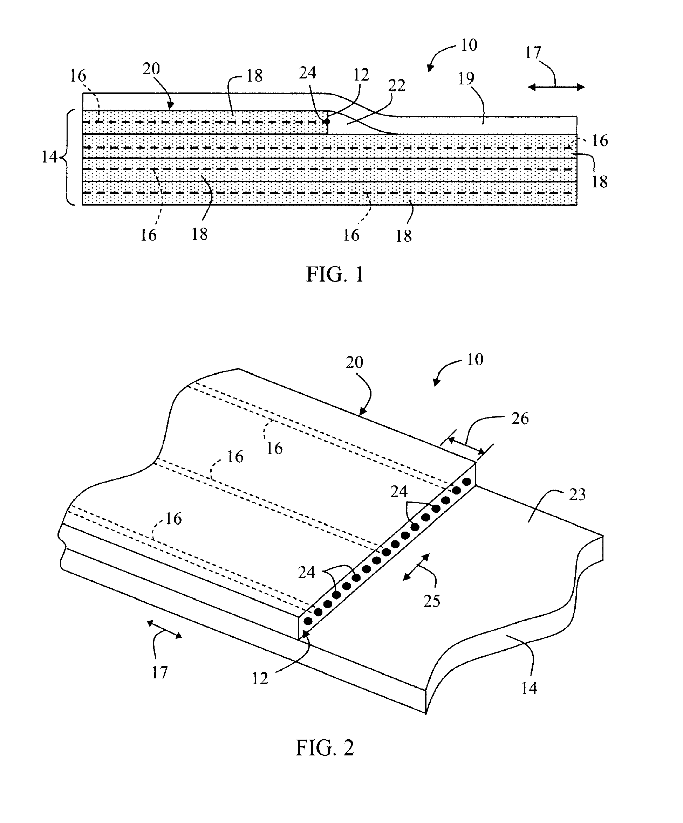

A representative example of the components of a laminate material 10, including a depiction of the tapered effect of a ply drop 12, is illustrated in FIG. 1. The laminate material 10 generally includes a plurality of adjacently disposed internal plies 14 assembled one on top of the other. Each ply 14 includes a plurality of fibers 16 (only one fiber is shown for purposes of clarity) surrounded by and supported within a matrix material 18. As shown, the fibers 16 are unidirectional and oriented within each ply 14 in a longitudinal direction 17. The laminate 10 may also include a cover ply 19, such as a biaxial fiberglass ply, that generally serves as the outer covering for the laminate10.

To enable a step-reduction or incremental change in the thickness of the laminate 10, a ply drop 12 is typically defined within the laminate 10 by the inclusion of a terminated ply 20. Thus, as shown in FIG. 1, a terminated ply 20 may be disposed between the cover layer 19 and one of the internal plies 14 so as to define an external ply drop 12 within the laminate 10. It should be appreciated that an internal ply drop may be similarly created by inserting a terminated ply 20 between adjacent internal plies 14. As shown, the ply drop 12 is generally defined at the end of the terminated ply 20 and, thus, provides a "drop-off" in the thickness of the laminate 10. FIG. 1 further illustrates a gap 22 defined between the terminated ply 20 and any adjacent plies, such as the cover ply 19 and internal ply 14. This gap 22 is typically created as a result of the sudden drop in thickness caused by the ply drop 12 and results in a matrix material-filled area and/or void within the laminate 10.

Referring now to FIG. 2, the configuration of a conventional ply drop 12 is illustrated. As shown, the terminated ply 20 generally defines a conventional ply drop 12 and includes a plurality of unidirectional fibers 16 extending in a longitudinal direction 17 of the terminated ply 20. It should be appreciated that the fibers 16 have been enlarged for purposes of illustration. For example, a typical fiber 16 within a laminate material 10 may have a diameter of less than 10 microns. The conventional ply drop 12 is generally characterized by a straight edge or straight planar surface extending in a transverse direction 25 across the terminated ply 20. Thus, it should be appreciated that the straight edge of the ply drop 12 is typically created by cutting or slicing transversely through the terminated ply 20. As particularly shown in FIG. 2, this straight cut or slice is made directly through the fibers 16, resulting in the fibers terminating at various points 24 along the planar surface of the ply drop 12. As such, a straight edged, perpendicular drop is created between the terminated ply 20 and the outer surface 23 of the adjacent ply 14.

While the straight edged drop of a conventional ply drop 12 certainly provides for efficient thickness tapering of a laminate 10, such geometry also has a detrimental impact on the structural integrity of the laminate 10. In particular, conventional, straight edged ply drops 12 create discontinuities within the laminate, which can give rise to a substantial stress concentration at the ply drop 12. As indicated above, a gap 22 (FIG. 1) is typically created between the terminated ply 20 and any adjacent plies. Accordingly, an area of low-strength is created adjacent to the ply drop 12 that can result in failure of the laminate 10, such as through the formation and propagation of cracks within the matrix material 18. This may be particularly true when the gap 22 is inadequately filled with matrix material during subsequent processing of the laminate 10 and a pore or void remains in the finished laminate. However, even when the gap 22 is properly filled with matrix material, an area of low strength is still created at the ply drop 12. In particular, the static and fatigue strength of a matrix material is typically of a magnitude of 100 or more times less than the strength of a reinforcement material.

Moreover, straight edged ply drops 12 produce an abrupt termination of the fibers 16 within a terminated ply 20. For example, as shown in FIG. 2, when a terminated ply 20 includes unidirectional fibers 16 extending in a longitudinal direction 17 of the ply 20, all of the fibers 16 terminate at points 24 along the planar edge of the ply drop 12. Such a configuration substantially increases the stress concentration at the ply drop 12. In particular, a large interlaminar shear stress component is introduced as the tensile load capability of the each of the fibers 16 decreases to zero at the ply drop 12. As the tensile load capability of the fibers 16 reduces to zero, the shear load at the ply drop 12 is transferred to the weaker matrix material 18. As such, a conventional straight edged ply drop 12 results in a substantial reduction in the strength of the laminate 10 at the ply drop12, which can eventually lead to failure of the laminate 10 through delamination and/or cracking of the matrix material 18.

Accordingly, a ply drop modification that reduces stress concentrations within a laminate would be welcomed in the technology.

Various aspects and advantages of the invention will be set forth in part in the following description, or may be clear from the description, or may be learned through practice of the invention.

In one aspect, the present subject matter discloses a composite laminate material. The composite laminate material includes a plurality of adjacently disposed plies, with at least one of the plies being configured as a terminated ply. Additionally, a ply drop is defined by the terminated ply. Further, at least one ply drop additive is disposed substantially adjacent to the ply drop.

In another aspect, the present subject matter discloses a method of manufacturing a composite laminate material. The method includes assembling a plurality of plies to form a layered structure, wherein at least one of the plies comprises a terminated ply defining a ply drop. The method further includes positioning at least one ply drop additive substantially adjacent to the ply drop and processing the layered structure to effect adhesion of the plies.

Various features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention. In the drawings:
FIG. 1 illustrates a partial, side view of a laminate composite material including a ply drop;
FIG. 2 illustrates a perspective view of conventional ply drop geometry;
FIG. 3 illustrates a perspective view of an embodiment of a laminate composite material including a ply drop modification in accordance with aspects of the present subject matter;
FIG. 4 illustrates a partial, side view of the embodiment of the laminate composite material illustrated in FIG. 3;
FIG. 5 illustrates a perspective view of another embodiment of a laminate composite material including a ply drop modification in accordance with aspects of the present subject matter;
FIG. 6 illustrates a partial, side view of the embodiment of the laminate composite material illustrated in FIG. 5;
FIG. 7 illustrates a perspective view of a further embodiment of a laminate composite material including a ply drop modification in accordance with aspects of the present subject matter;
FIG. 8 illustrates a partial, side view of the embodiment of the laminate composite material illustrated in FIG. 7;
FIG. 9 illustrates a perspective view of an even further embodiment of a laminate composite material including a ply drop modification in accordance with aspects of the present subject matter;
FIG. 10 illustrates a perspective view of yet another embodiment of a laminate composite material including a ply drop modification in accordance with aspects of the present subject matter; and,
FIG. 11 illustrates a partial, side view of a laminate composite material including a gap joint.

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

The present subject matter is generally directed to composite laminate materials ("laminates") including ply drop modifications configured to reduce stress concentrations within the laminate. In particular, the present subject matter is directed to laminates including at least one ply drop additive and/or having disoriented or disrupted fiber terminations. Generally, it is believed that, by producing a laminate that includes one or more of such ply drop modifications, a significant increase in the strength of the laminate can be achieved, thereby resulting in a reduction of the stress concentration at the ply drop. Moreover, such increases in strength may enable components formed from the laminates of the present subject matter to have a reduced size/thickness without compromising the structural integrity of the component. Accordingly, a significant material and cost savings can be achieved.

Generally, the modified ply drops of the present subject matter will be described herein with respect to laminates including longitudinally extending unidirectional fibers. Since plies including unidirectional fibers may generally have a strength and stiffness two-to-four times greater than that of biaxial, trixial, or mat plies, the loads transferred from a unidirectional ply to any adjacent matrix material as a result of the fiber terminations at a ply drop may be significantly higher than the loads transferred from other types of plies. As such, laminates including unidirectional fibers may be much more susceptible to failure due to cracking of the matrix material or delamination as such higher loads are transferred to the relatively low-strength matrix material. Similar logic applies to the use of carbon fibers as reinforcement materials. Since carbon plies are generally stronger than fiberglass plies, a significantly larger load is transferred at a ply drop from a carbon ply to the adjacent matrix material. Accordingly, it may be particularly desirable to apply the modified ply drops of the present subject matter to laminates including unidirectional, carbon fibers.

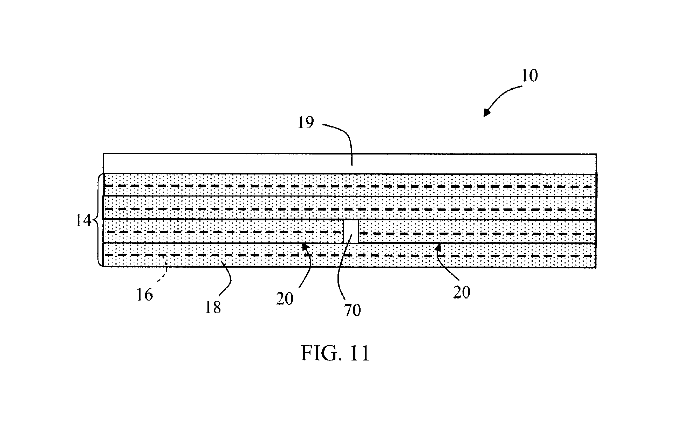

However, it should be appreciated that the scope of the disclosed technology need not be limited to laminates including unidirectional, carbon fibers. Rather, the present subject matter is generally applicable to any type and/or configuration of composite laminate material known in the art. Thus, the present disclosure can be applied to laminate materials including any suitable type of ply, such as fabric plies or prepreg plies, and including any suitable reinforcement and matrix materials. Similarly, adhesion of the plies contained within the laminate may be effected by any suitable manufacturing process, such as an infusion process, a vacuum bag molding prepreg process, a resin transfer molding process, a vacuum assisted resin transfer molding process or other suitable processes. Moreover, reinforcement materials utilized within the laminate materials of the present subject matter may be woven or non-woven and may be disposed within each ply at any suitable angle and/or orientation. For example, suitable ply orientations may include unidirectional, biaxial, triaxial, and the like. Further, the modified ply drops described herein can be applied to both internal and external ply drops, as well as to the splice or gap joints described below in reference to FIG. 11.

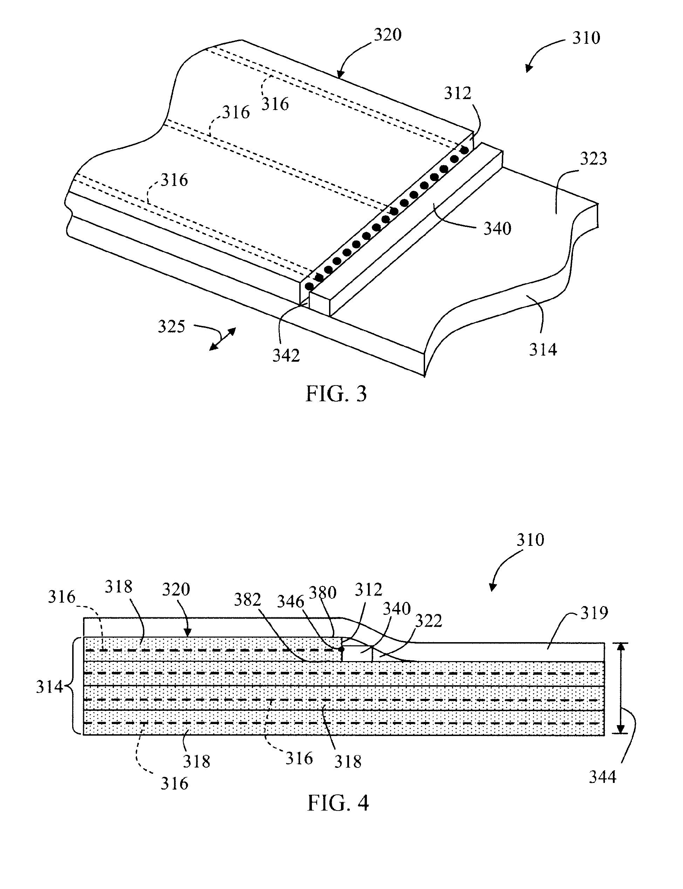

Referring now to the drawings, FIGS. 3-8 illustrate various embodiments of composite laminate materials including ply drop additives. Generally, it is believed that a significant reduction in the stress concentration within a laminate can be achieved by inserting a ply drop additive adjacent to a ply drop. In particular, the ply drop additive may be used to fill the gap 22 (FIG. 1) defined at the ply drop and, thus, provide increased strength to this otherwise low-strength area. Moreover, by at least partially filling in the gap, cracks can be prevented from forming and/or propagating within the matrix material at the ply drop. The ply drop additives of the present subject matter may also serve to reinforce the fiber terminations of the fibers disposed within a terminated ply. As such, the shear strength of the laminate may be increased at the ply drop.

Referring particularly to FIGS. 3 and 4, one embodiment of a laminate composite material 310 including a ply drop additive 340 is illustrated in accordance with aspects of the present subject matter. In particular, FIG. 3 illustrates a perspective view of a terminated ply 320 defining a ply drop 312, with the ply drop additive 340 being disposed adjacent to the ply drop 312. FIG. 4 illustrates a partial, side view of the laminate 310, particularly illustrating the ply drop additive 340 disposed within the gap 322 partially defined by the ply drop 312.

As shown in FIGS. 3 and 4, the laminate 310 of the present subject matter generally includes a plurality of adjacently disposed internal plies 314 and a cover ply 319 serving as the outer covering of the laminate 310. Each of the plies 314 may include a plurality of fibers 316 surrounded by and supported within a matrix material 318. Additionally, as shown, one of the interior plies 314 may be configured as a terminated ply 320. As such, the terminated ply 320 generally defines a ply drop 312 configured to enable a thickness 344 of the laminate 310 to be reduced or otherwise tapered.

The laminate 310 further includes a ply drop additive 340 disposed substantially adjacent to the ply drop 312. As shown, the ply drop additive 340 comprises a strip of tape 340 extending across the outer surface 323 of the adjacent ply 314 in a substantially transverse direction 325. However, in alternative embodiments, the tape 340 may be configured to extend adjacent to the ply drop 312 in any suitable direction. Generally, the tape 340 may be configured to at least partially fill in the gap 322 defined at the ply drop 312. As such, the tape 340 may provide increased strength at the ply drop 312 and may also prevent the formation and/or propagation of cracks within the matrix material 318. The tape 340 may further serve to reinforce the edge or surface of the ply drop 312 as well as the fiber terminations 346 disposed at the ply drop 312 in order to prevent delamination of the terminated ply 320.

The tape 340 may generally comprise any suitable tape known in the art. As used herein, the term "tape" may include a strip of any type of material, regardless of whether an adhesive has been applied to the material. However, in a particular embodiment, the tape 340 may comprise an adhesive prepreg tape sheared into a relatively narrow strip so as to fit within the gap 322 defined at the ply drop 312. As is generally known, adhesive prepreg tapes may comprise an adhesive matrix material, such as any suitable polymeric composition, reinforced with glass fillers, carbon fillers or other reinforcement-type fillers. Thus, suitable adhesive prepreg tapes may include an epoxy or vinyl ester adhesive prepreg tapes. In another embodiment, the tape 340 may comprise a narrow strip of continuous strand mat (CSM) tape. For example, suitable CSM tapes may include a continuous woven fiber tape, such as woven fiberglass tape. Additionally, in some embodiments, the CSM tape may also be impregnated with any suitable matrix material, such as an epoxy resin.

Generally, the strip of tape 340 may be disposed substantially adjacent to the ply drop 312. In one embodiment, the strip of tape 340 may be disposed directly adjacent to the ply drop 312. For example, as shown in FIG. 4, the tape 340 may be positioned so as to be in contact with the terminated ply 320 at the ply drop 312. Alternatively, as shown in FIG. 3, the tape 340 may be positioned away from the terminated ply 320 such that a space 342 is defined between the tape 340 and the terminated ply 320.

It should also be appreciated that the strip of tape 340 may generally have any suitable dimensions. However, in various embodiments of the present subject matter, it may be preferable that the tape 340 have dimensions that enable it to fit within the gap 322 defined at the ply drop 312 without altering the desired taper of the laminate 310. For example, in one embodiment, the tape 340 may be configured to have a relatively large cross-sectional area in order to maximize the amount of space occupied by the tape 340 within the gap 322. Alternatively, the tape 340 may be configured to have a relatively small cross-sectional area so that only a small portion of the gap is filled in by the tape 340. In such an embodiment, it should be appreciated that multiple strips of tape 340 may be stacked one on top of the other or may otherwise be adjacently disposed in order to substantially fill in the gap 322. It should be further appreciated that, although the tape 340 is illustrated as having a substantially rectangular cross-section, the tape 340 may generally have any suitable cross-section. For example, in one embodiment, it may be desirable for the tape 340 to have a cross-section that is partially angled to match or otherwise correspond to the taper or profile of the cover ply 319 at the ply drop 312.

Additionally, in various embodiments, the strip of tape 340 need not be disposed substantially perpendicular to the outer surface 323 of the adjacent ply 314. In particular, one or more strips of tape 340 may be positioned within the gap 322 at various suitable angles relative to the outer surface 323 of the adjacent ply 314. It should also be appreciated that, in several embodiments of the present subject matter, the tape 340 may define one or more holes, slats, gaps, grooves or the like (not illustrated) along its length. Such holes, slats, gaps or grooves may be configured to provide a pathway for the flow of matrix material over, around and through the tape 340 during subsequent processing of the laminate 310.

Moreover, as shown in FIGS. 3 and 4, the strip of tape 340 is depicted as being disposed entirely within the gap 322 defined at the ply drop 312. However, in alternative embodiments, the tape 340 may be configured such that it is at least partially disposed between the terminated ply 320 and any adjacent plies. Generally, it is believed that, by locating at least a portion of the tape 340 at a position between the terminated ply 320 and an adjacent ply, the interlaminar shear stresses created between the adjacent plies can be reduced and, thus, prevent delamination of the laminate. Thus, in one embodiment, the strip of tape 340 may be positioned within the laminate 310 such that a portion tape 340 is disposed between the terminated ply 320 and an adjacent ply, such as at the interface 380 between the terminated ply 320 and the cover ply 319 or at the interface 382 between the terminated ply 320 and the adjacent internal ply 314, with the remainder of the tape 340 extending into and at least partially filling the gap 322 created at the ply drop 312. In a different embodiment, the tape 340 may be entirely disposed between the terminated ply 320 and an adjacent ply in a location proximate to the ply drop 312, such as at interfaces 380,382.

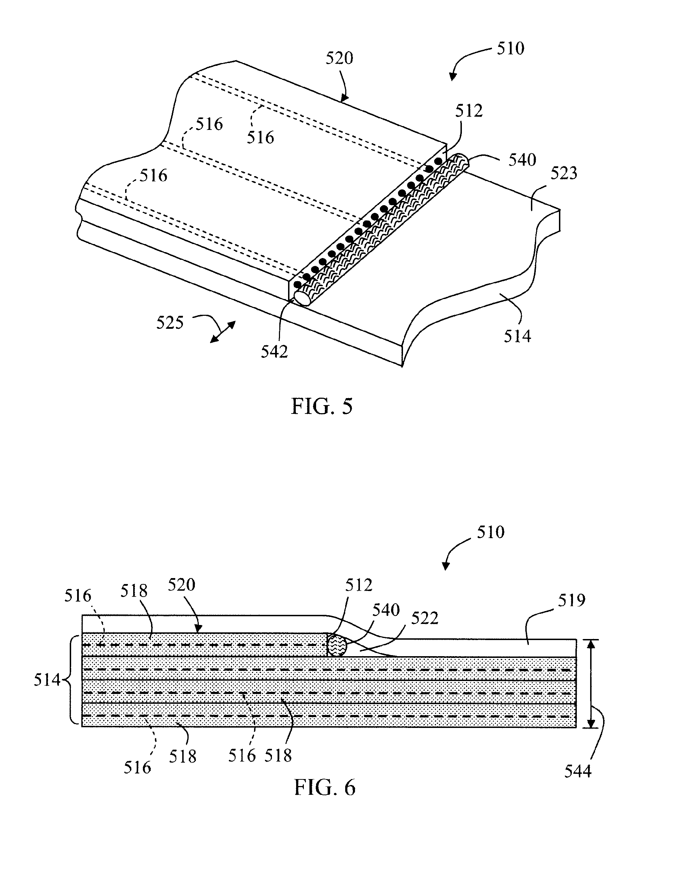

Referring now to FIGS. 5 and 6, another embodiment of a laminate composite material 510 including a ply drop additive 540 is illustrated in accordance with aspects of the present subject matter. In particular, FIG. 5 illustrates a perspective view of a terminated ply 520 defining a ply drop 512, with the ply drop additive 540 being disposed adjacent to the ply drop 512. FIG. 6 illustrates a partial, side view of the laminate 510, particularly illustrating the ply drop additive 540 disposed within the gap 522 partially defined by the ply drop 512.

As shown in FIGS. 5 and 6, the laminate 510 of the present subject matter generally includes a plurality of adjacently disposed internal plies 514 and a cover ply 519 serving as the outer covering of the laminate 510. Each of the plies 514 may include a plurality of fibers 516 surrounded by and supported within a matrix material 518. Additionally, as shown, one of the interior plies 514 may be configured as a terminated ply 520. As such, the terminated ply 520 generally defines a ply drop 512 configured to enable a thickness of the laminate 510 to be reduced or otherwise tapered.

The laminate 510 further includes a ply drop additive 540 disposed substantially adjacent to the ply drop 512. As shown, the ply drop additive 540 comprises a fiber strand 540 extending across the outer surface 523 of the adjacent ply 514 in a substantially transverse direction 525. However, in alternative embodiments, the fiber strand 540 may be configured to extend adjacent to the ply drop 512 in any suitable direction. Generally, the fiber strand 540 may be configured to at least partially fill the gap 522 defined at the ply drop 512. As such, the fiber strand 540 may be configured to provide increased strength at the ply drop 512 and may also prevent the formation and/or propagation of cracks within the matrix material 518. The fiber strand may further be configured to increase the shear strength of the laminate 510 by providing one or more transversely extending fibers disposed substantially adjacent to the ply drop 512, which generally serve to reduce the stress concentration within the laminate 510 by providing additional reinforcement and strength to the laminate 510.

The fiber strand 540 of the present subject matter may generally comprise any suitable fiber strand known in the art. As used herein, the term "fiber strand" may include a single fiber or a plurality of woven, stitched or non-woven fibers. Thus, in various embodiments, the fiber strand 540 may comprise a strand of roving or yarn. For example, the fiber strand 540 may comprise a multiple-end or single-end fiberglass roving. Additionally, in a particular embodiment of the present subject matter, the fiber strand 540 may comprise a strand of bulked roving, bulked yarn or texturized roving.

Generally, the fiber strand 540 may be disposed substantially adjacent to the ply drop 512. In one embodiment, the fiber strand 540 may be disposed directly adjacent to the ply drop 512. For example, as shown in FIG. 6, the fiber strand 540 may be positioned against the ply drop 512 so as to be in contact with terminated ply 520. Alternatively, as shown in FIG. 5, the fiber strand 540 may be positioned at a distance from the terminated ply 520 such that a space 542 is defined between the fiber strand 540 and the terminated ply 520. Further, it should also be appreciated that the fiber strand 540 may generally have any suitable dimensions. However, in various embodiments of the present subject matter, it may be preferable that the tape 540 have dimensions that enable it to fit within the gap 522 defined at the ply drop 512 without altering the desired taper of the laminate 510. For example, in one embodiment, the fiber strand 540 may be configured to have a relatively large cross-sectional area or diameter in order to maximize the amount of space occupied by the fiber strand 540 within the gap 522. In an alternative embodiment, the fiber strand 540 may be configured to have a relatively small cross-sectional area or diameter so that only a small portion of the gap 522 is filled in by the strand 540. In such an embodiment, it should be appreciated that multiple fiber strands 540 may be disposed substantially adjacent to the ply drop 512 to in order to substantially fill in the gap 522. Additionally, although the fiber strand 540 is depicted herein as having a substantially circular cross-section, it should be appreciated that the fiber strand 540 of the present subject matter may generally have any suitable cross-section, such as an elliptical or rectangular cross-section.

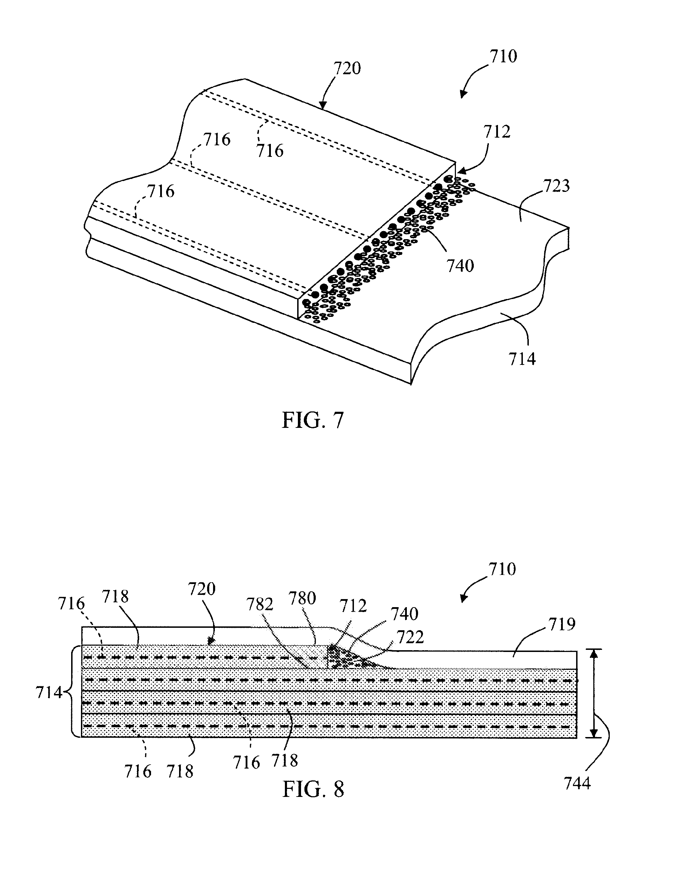

Referring now to FIGS. 7 and 8, a further embodiment of a laminate composite material 710 including a ply drop additive 740 is illustrated in accordance with aspects of the present subject matter. In particular, FIG. 7 illustrates a perspective view of a terminated ply 720 defining a ply drop 712, with the ply drop additive 740 being disposed adjacent to the ply drop 712. FIG. 8 illustrates a partial, side view of the laminate 710, particularly illustrating the ply drop additive 740 disposed within the gap 722 partially defined by the ply drop 712.

As shown in FIGS. 7 and 8, the laminate 710 of the present subject matter generally includes a plurality of adjacently disposed internal plies 714 and a cover ply 719 serving as the outer covering of the laminate 710. Each of the plies 714 may include a plurality of fibers 716 surrounded by and supported within a matrix material 718. Additionally, as shown, one of the interior plies 714 may be configured as a terminated ply 720. As such, the terminated ply 720 generally defines a ply drop 712 configured to enable a thickness 744 of the laminate 710 to be reduced or otherwise tapered.

The laminate 710 further includes a ply drop additive 740 disposed substantially adjacent to the ply drop 712. As shown, the ply drop additive 740 comprises a matrix material strengthener 740 distributed throughout an area substantially adjacent to the ply drop 712. Generally, the matrix material strengthener 740 may be configured to at least partially fill the gap 722 defined at the ply drop 712. As such, the matrix material strengthener 740 may be configured to increase the strength of the matrix material 718 that may be infused or otherwise inserted into the gap 722 during processing of the laminate 710 (e.g., during infusion processing, vacuum bag molding processing and the like). By providing additional strength to the matrix material 718, the likelihood of cracks forming or propagating within the matrix material 718 at or adjacent to the ply drop 712 can be reduced significantly.

The matrix material strengthener 740 may generally comprise any suitable filler material that may be used to fill the gap 722 defined at the ply drop 712 in order to increase the strength of the matrix material 718 and/or the laminate 710. As used herein, the term "matrix material strengthener" may include both filler materials configured to strengthen the matrix material 718 and filler materials configured to toughen the matrix material 718, such as many of the epoxy and rubbery modifiers described below. In one embodiment, the matrix material strengthener 740 may comprise any type of powder or particles. For example, the matrix material strengthener 740 may comprise a plurality of inorganic particles. Suitable inorganic particles may include a plurality of silica particles, such as fused silica, ground silica or fumed silica, or various other known inorganic particles. Alternatively, the matrix material strengthener 740 may comprise a plurality of organic particles, such as a plurality of elastomer-modified epoxy modifiers, elastomer-modified vinyl ester modifiers, carboxyl-terminated modifiers, other rubbery polymeric modifiers, or any other suitable organic particles known in the art. Additionally, it should be appreciated that the matrix material strengthener 740 may comprise a combination of different particles, such as a plurality of two or more organic particles, two or more inorganic particles or a mixture of organic and inorganic particles.

Additionally, in one embodiment, the matrix material strengthener 740 may be applied in a dry form and dispersed or spread out in an area adjacent to the ply drop 712 during assembly of the laminate 710. In an alternative embodiment, the matrix material strengthener 740 may be mixed with any suitable dispersant and sprayed or otherwise distributed into the area of interest. For example, any suitable polymeric composition, such as resin, may be mixed with organic or inorganic particles to form a liquid spray to permit the matrix material strengthener 740 to be sprayed directly into an area adjacent to the ply drop 712.

Moreover, as shown in FIGS. 7 and 8, the matrix material strengthener 740 is depicted as being disposed entirely within the gap 722 defined at the ply drop 712. However, in alternative embodiments, the matrix material strengthener 740 may be at least partially disposed between the terminated ply 720 and any adjacent plies. Generally, it is believed that, by disposing at least a portion of the matrix material strengthener 740 into a position between the terminated ply 720 and an adjacent ply, the interlaminar shear stresses created between the adjacent plies can be reduced and, thus, may prevent delamination of the laminate. Thus, in an embodiment in which the matrix material strengthener 740 comprises a plurality of particles, a portion of the particles may be disposed within the gap 722, with the remainder of the particles being dispersed between the terminated ply 720 and an adjacent ply, such as at the interface 780 between the terminated ply 720 and the cover ply 719 or at the interface 782 between the terminated ply 720 and the adjacent internal ply 714. In another embodiment, all of the particles may be positioned between the terminated ply 720 and an adjacent ply in a location proximate to the ply drop 712, such as at interfaces 780,782.

Although the ply drop additives of the present subject matter have been generally described in isolation, it should be appreciated that two or more ply drop additives may be used in combination to fill the gap defined at the ply drop or to otherwise strengthen the laminate. For example, in one embodiment, one or more strips of tape 340 may be combined with at least one matrix material strengthener 740 in order to reduce stress concentrations within a laminate. Similarly, in another embodiment, one or more fiber strands 540 may be utilized in conjunction with at least one matrix material strengthener 740.

It should also be appreciated that the inventors of the present subject matter believe that, by disrupting or disorienting the fiber terminations disposed at the ply drop, a significant reduction in the stress concentration of a laminate can be achieved. In particular, it is believed that the shear strength at the ply drop can be significantly increased by spreading out or disorienting the fiber terminations of the fibers. For example, by kinking, combing or otherwise disrupting the orientation of the fiber terminations, the longitudinal capabilities of the fibers can be inhibited, which results in a reduction in the magnitude of interlaminar shear stresses created between a terminated ply and any adjacent plies in the area of the ply drop.

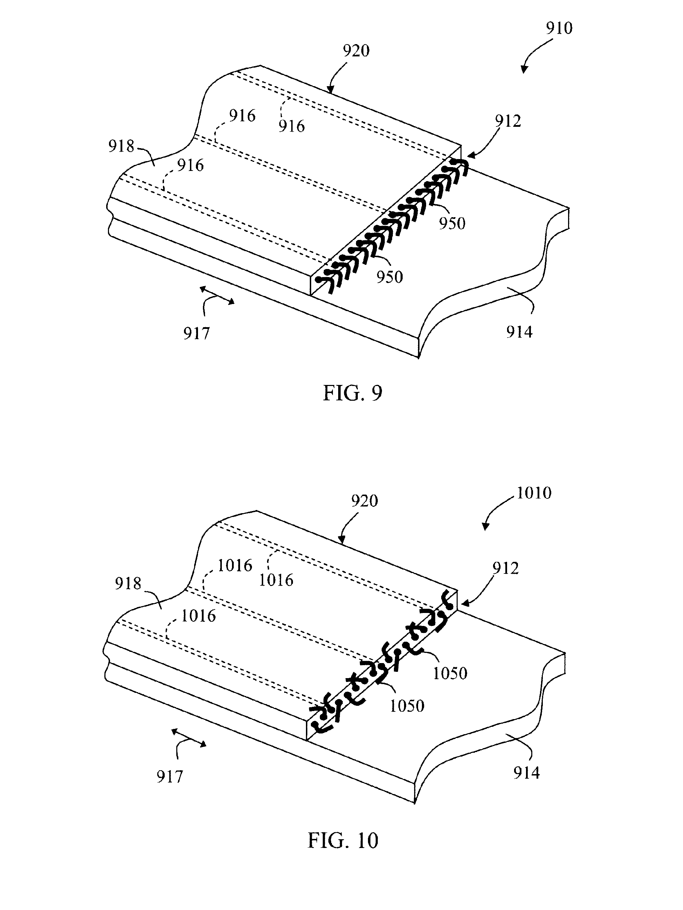

Referring now to FIGS. 9 and 10, perspective views of two embodiments of a composite laminate material 910,1010 including a terminated ply 920 having disoriented or disrupted fiber terminations 950,1050 is illustrated in accordance with aspects of the present subject matter. As shown, the composite laminate material 910,1010 includes a terminated ply 920 disposed on top of an adjacent internal ply 914. The terminated ply 920 generally defines a ply drop 912 configured to enable a thickness of the laminate 910,1010 to be reduced or otherwise tapered. Additionally, the terminated ply 920 includes a plurality of fibers 916,1016 supported in and surrounded by a matrix material 918. Each of the fibers 916,1016 generally extend in a longitudinal direction 917 of the terminated ply 920 and define a fiber termination 950,1050 at the ply drop 912.

As particularly shown in both FIGS. 9 and 10, the fiber terminations 950,1050 of the fibers 916,1016 have been disoriented or otherwise disrupted from their original longitudinal orientation. For example, as depicted in FIG. 9, the fiber terminations 950 have been uniformly bent, angled, kinked or otherwise disrupted such that each fiber termination 950 generally extends in substantially the same direction. Specifically, each fiber termination 950 has been bent or otherwise disrupted so as to form approximately a 90 degree angle relative to the plane or surface of the ply drop 912 and relative to the longitudinal direction 917. However, it should be appreciated that the fiber terminations 950 may generally be uniformly bent or disrupted so as to extend at any angle and/or direction relative to the original longitudinal orientation/direction 917 of the fibers 916. In contrast to the embodiment of FIG. 9, the fiber terminations 1050 illustrated in FIG. 10 have been randomly bent, angled, kinked or otherwise disrupted. As such, the fiber terminations 1050 are generally oriented at various angles and in various directions relative to the original longitudinal orientation/direction 917 of the fibers 1016.

It should be appreciated that the fibers 916,1016 need not be oriented longitudinally within the terminated ply 920 for the disruption or disorientation of the fiber terminations 950,1050 to be an effective stress reducer. For example, the fibers of the present subject matter may be oriented so as to extend in the direction of the ply drop at a 45 degree angle. In such an embodiment, the stress concentration of the laminate may be reduced by uniformly or randomly disrupting the fiber terminations away from their original 45 degree orientation at the ply drop.

To achieve the uniform disorientation or disruption illustrated in FIG. 9, it should be appreciated that the fiber terminations 950 of each fiber 916 may generally be combed, rolled or otherwise mechanically disturbed in a singular direction. Similarly, the random disorientation or disruption illustrated in FIG. 10 may be achieved by blowing the fiber terminations 1050 with an air gun, striking the fiber terminations 1050 with a hammer or otherwise mechanically disturbing the fiber terminations 1050 in various random directions. It should be appreciated that, in embodiments in which the terminated ply of the present subject matter comprises a prepreg ply, it may be necessary to add heat while simultaneously disrupting the fibers in order to achieve a uniform or random disorientation of the fiber terminations.

It should also be appreciated that the ply drop modifications of the present subject matter may also be applied to splice or gap joints. A laminate material 10 including gap joint 70 is illustrated in FIG. 11. Generally, the laminate 10 includes a plurality of adjacently disposed internal plies 14 stacked one on top of the other and a cover ply 19 serving as the outer covering for the laminate 10. Each ply 14 generally includes a plurality of fibers 16 (only one is illustrated for purposes of clarity) surrounded by and supported within a matrix material 18. Additionally, as shown, a gap joint 70 is defined between two terminating plies 20 of the laminate 10. Such a joint 70 is typically created when the roll of ply material being used to create the laminate 10 runs out. Thus, the length of the remaining ply may not be sufficient to cover the distance needed within the tool or mold. To cover the remaining distance, a second roll of ply must be inserted into the mold. Accordingly, as illustrated in FIG. 11, a gap joint 70 may be defined between the two adjacently disposed plies. Moreover, because each of the plies are terminated plies 20, the tensile load capability of the fibers 16 within each terminated ply 20 is reduced to zero at the gap joint 70, thereby introducing a stress concentration at the joint 70. As such, it should be appreciated that one or more of the ply drop modifications described herein may be applied to each of the terminated plies 20 in order to reduce the stress concentration at the gap joint 70.

Further, it should be appreciated that application of the present subject matter need not be limited to the single ply drop configurations described and illustrated herein. For example, other forms of ply drop configurations may include multiple ply drops staggered or disposed one on top of the other. In particular, two, three or more terminated plies may be adjacently disposed to create a multiple ply drop. One skilled in the art should appreciate that the ply drops modifications described herein can be applied to such multiple ply drops.

Additionally, it should be appreciated that the various embodiments described herein need not be utilized in isolation. Rather, any suitable combination of the disclosed ply drop modifications may be used to reduce stress concentrations within a laminate material. For example, in one embodiment, two or more different ply drop additives may be disposed adjacent to a ply drop. In another embodiment, a terminated ply may include both uniformly and randomly distributed fiber terminations. In a further embodiment, one or more ply drop additives may be used in conjunction with disoriented fiber terminations.

The present subject matter is also directed to methods of manufacturing a laminate composite material. In one embodiment, the method may include assembling a plurality of plies to form a layered structure, wherein at least one of the plies includes a terminated ply defining a ply drop. Such method may also include disposing at least one ply drop additive substantially adjacent to the ply drop and processing the layered structure to effect adhesion of the plies. As indicated above, adhesion of the plies may be effected utilizing any suitable manufacturing process known in the art. For example, suitable processes may include, but are not limited to, an infusion process, a vacuum bag molding prepreg process, a resin transfer molding process, a vacuum assisted resin transfer molding process and other similar processes.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following numbered clauses:
1. A composite laminate material, comprising:
   a plurality of adjacently disposed plies, at least one of the plies being configured as a terminated ply; and,
   a ply drop defined by the terminated ply,
   wherein at least one ply drop additive is disposed substantially adjacent to the ply drop.
2. The composite laminate material of clause 1, wherein the at least one ply drop additive is configured to fill in a gap partially defined by the ply drop.
3. The composite laminate material of any preceding clause, wherein the at least one ply drop additive is disposed at least partially between the terminated ply and an adjacent ply.
4. The composite laminate material of any preceding clause, wherein the at least one ply drop additive comprises at least one strip of tape.
5. The composite laminate material of any preceding clause, wherein the at least one strip of tape comprises at least one strip of adhesive prepreg tape
6. The composite laminate material of any preceding clause, wherein the at least one strip of tape comprises at least one strip of continuous strand mat tape.
7. The composite laminate material of any preceding clause, wherein the at least one ply drop additive comprises at least one fiber strand.
8. The composite laminate material of any preceding clause, wherein the at least one fiber strand is disposed transverse to a longitudinal direction of the terminated ply.
9. The composite laminate material of any preceding clause, wherein the at least one fiber strand comprises at least one strand of roving or yarn.
10. The composite laminate material of any preceding clause, wherein the at least one ply drop additive comprises at least one matrix material strengthener.
11. The composite laminate material of any preceding clause, wherein the at least one matrix material strengthener comprises a plurality of organic or inorganic particles.
12. The composite laminate material of any preceding clause, wherein the at least one matrix material strengthener is configured to be sprayed substantially adjacent to the ply drop.
13. The composite laminate material of any preceding clause, wherein the terminated ply comprises a plurality of fibers, the fibers having an orientation within the terminated ply, wherein the orientation of at least a portion of the fibers is disrupted at the ply drop.
14. The composite laminate material of any preceding clause, wherein the orientation of at least a portion of the fibers is disrupted uniformly at the ply drop.
15. The composite laminate material of any preceding clause, wherein the orientation of at least a portion of the fibers is disrupted randomly at the ply drop.
16. A method of manufacturing a laminate composite material, the method comprising:
   assembling a plurality of plies to form a layered structure, at least one of the plies comprising a terminated ply defining a ply drop;
   disposing at least one ply drop additive substantially adjacent to the ply drop; and,
   processing the layered structure to effect adhesion of the plies.
17. The method of any preceding clause, further comprising disrupting an orientation of a plurality of fiber terminations disposed at the ply drop.
18. The method of any preceding clause, wherein the at least one ply drop additive comprises at least one strip of tape.
19. The method of any preceding clause, wherein the at least one ply drop additive comprises at least one fiber strand
20. The method of any preceding clause, wherein the at least one ply drop additive comprises at least one matrix material strengthener.

## Claims

1. A composite laminate material (310, 510, 710), comprising:
a plurality of adjacently disposed plies (314, 514, 714), at least one of the plies (314, 514, 714) being configured as a terminated ply (320, 520, 720); and,
a ply drop (312, 512, 712) defined by the terminated ply (320, 520, 720),
wherein at least one ply drop additive (340, 540, 740) is disposed substantially adjacent to the ply drop (312, 512, 712).

2. The composite laminate material (310, 510, 710) as in claim 1, wherein the at least one ply drop additive (340, 540, 740) is configured to fill in a gap (322, 522, 722) partially defined by the ply drop (312, 512, 712).

3. The composite laminate material (310, 510, 710) as in any preceding claim, wherein the at least one ply drop additive (340, 540, 740) is disposed at least partially between the terminated ply (320, 520, 720) and an adjacent ply (314, 514, 714).

4. The composite laminate material (310, 510, 710) as in any preceding claim, wherein the at least one ply drop additive (340, 540, 740) comprises at least one strip of tape (340).

5. The composite laminate material (310, 510, 710) as in claim 4, wherein the at least one strip of tape (340) comprises at least one strip of adhesive prepreg tape or at least one strip of continuous strand mat tape.

6. The composite laminate material (310, 510, 710) as in any preceding claim, wherein the at least one ply drop additive (340, 540, 740) comprises at least one fiber strand (540).

7. The composite laminate material (310, 510, 710 as in claim 6, wherein the at least one fiber strand (540) is disposed transverse to a longitudinal direction of the terminated ply (520).

8. The composite laminate material (310, 510, 710) as in claim 6 or claim 7, wherein the at least one fiber strand (540) comprises at least one strand of roving or yarn.

9. The composite laminate material (310, 510, 710) as in any preceding claim, wherein the at least one ply drop additive (340, 540, 740) comprises at least one matrix material strengthener (740).

10. The composite laminate material (310, 510, 710) as in claim 9, wherein the at least one matrix material strengthener (740) comprises a plurality of organic or inorganic particles.

11. The composite laminate material (310, 510, 710) as in any preceding claim, wherein the terminated ply (320, 520, 720) comprises a plurality of fibers (316, 516, 716), the fibers (316, 516, 716) having an orientation within the terminated ply (320, 520, 720), wherein the orientation of at least a portion of the fibers (316, 516, 716) is disrupted at the ply drop (312, 512, 712).

12. The composite laminate material (310, 510, 710) as in claim 11, wherein the orientation of at least a portion of the fibers (316, 516, 716) is disrupted uniformly at the ply drop (312, 512, 712).

13. The composite laminate material (310, 510, 710) as in claim 11, wherein the orientation of at least a portion of the fibers (316, 516, 716) is disrupted randomly at the ply drop (312, 512, 712).

14. A method of manufacturing a laminate composite material (310, 510, 710), the method comprising:
assembling a plurality of plies (314, 514, 714) to form a layered structure, at least one of the plies (314, 514, 714) comprising a terminated ply (320, 520, 720) defining a ply drop (312, 512, 712);
disposing at least one ply drop additive (340, 540, 740) substantially adjacent to the ply drop (312, 512, 712); and,
processing the layered structure to effect adhesion of the plies (314, 514, 714).

15. The method as in claim 14, further comprising disrupting an orientation of a plurality of fiber terminations (950, 1050) disposed at the ply drop (312, 512, 712).
